# EUROPÄISCHE PATENTSCHRIFT

(11) **EP 1 379 468 B1**
(45) Veröffentlichungstag und Bekanntmachung des Hinweises auf die Patenterteilung: **29.12.2004**
(21) Anmeldenummer: 02735034.7
(22) Anmeldetag: 10.04.2002
(51) Int. Cl.: C01B 25/45, H01M 4/58

(54) **BINÄRE, TERNÄRE UND QUATERNÄRE LITHIUMPHOSPHATE, VERFAHREN ZU IHRER HERSTELLUNG UND IHRE VERWENDUNG**
BINARY, TERNARY AND QUATERNARY LITHIUM PHOSPHATES, METHOD FOR THE PRODUCTION THEREOF AND USE OF THE SAME
PHOSPHATES DE LITHIUM BINAIRES, TERNAIRES ET QUATERNAIRES, LEUR PROCEDE DE PRODUCTION ET LEUR UTILISATION

(30) Priorität: 10.04.2001 DE 10117904
(43) Veröffentlichungstag der Anmeldung: 14.01.2004
(73) Patentinhaber: Zentrum für Sonnenenergie- und Wasserstoff-Forschung Baden-Württemberg Gemeinnützige Stiftung, 89081 ULm (DE)
(72) Erfinder: HEMMER, Reinhard, P., 89257 Illertissen (DE); ARNOLD, Giesela, 89077 Ulm (DE); VOGLER, Christian, 89198 Westerstetten-Vorderdenkental (DE); WOHLFAHRT-MEHRENS, Margret, 89257 Illertissen (DE)
(74) Vertreter: TER MEER STEINMEISTER & PARTNER GbR
(86) Internationale Anmeldenummer: PCT/DE2002/001323
(87) Internationale Veröffentlichungsnummer: WO 2002/083555

(56) Entgegenhaltungen:
- EP-A- 1 261 050
- WO-A-97/40541
- DATABASE WPI Section Ch, Week 200256 Derwent Publications Ltd., London, GB; Class L03, AN 2002-522963 XP002228973 & JP 2002 117831 A (SONY CORP), 19. April 2002 (2002-04-19)
- KADI A K ET AL: "Phospho-olivines as positive-electrode materials for rechargeable lithium batteries" JOURNAL OF THE ELECTROCHEMICAL SOCIETY, ELECTROCHEMICAL SOCIETY. MANCHESTER, NEW HAMPSHIRE, US, Bd. 144, Nr. 4, April 1997 (1997-04), Seiten 1188-1194, XP002169166 ISSN: 0013-4651
- ANDERSSON A S ET AL: "Lithium extraction/insertion in LiFePO4: an X-ray diffraction and Mossbauer spectroscopy study" SOLID STATE IONICS, NORTH HOLLAND PUB. COMPANY. AMSTERDAM, NL, Bd. 130, Nr. 1-2, Mai 2000 (2000-05), Seiten 41-52, XP004197786 ISSN: 0167-2738

## Beschreibung

### Gebiet der Erfindung

Die vorliegende Erfindung betrifft binäre, ternäre und quaternäre Lithiumphosphate, insbesondere Lithiumeisenphosphate, ein Verfahren zur ihrer Herstellung durch Ausfällung aus wäßrigen Lösungen und ihre Verwendung als Kathodenmaterial in Lithiumakkumulatoren, insbesondere sekundären Lithiumbatterien.

### Stand der Technik

Lithiumeisenphosphat de-insertiert Lithiumionen reversibel bei einem elektrochemischen Potential von etwa 3,5 V gegen Li/Li⁺. Die theoretische spezifische Kapazität beträgt 170 mAh/g. Allerdings ist die Kapazität der bekannten Lithiumeisenphosphate bei Raumtemperatur gering und beträgt üblicherweise nur 70 bis 100 mAh/g. Die reversible elektrochemische Exsertion von Lithiumionen ist außer für Lithiumeisenphosphat bislang nur für Lithiumeisenmanganphosphat-Mischkristalle und Lithiumkobaltphosphat beobachtet worden. Lithiumeisen-manganphosphat-Mischkristalle zeigen dabei zwei Potentialplateaus bei 3.5 V und bei 4 V gegen Li/Li⁺ und eine reversible spezifische Kapazität von maximal 70 mAh/g. Lithiumkobaltphosphat zeigt ein flaches Potentialplateau bei 4,8 V gegen Li/Li⁺ mit einer reversiblen Kapazität von maximal 110 mAh/g.

Alle bislang beschriebenen Herstellungsverfahren für Lithiumeisenphosphat und andere Phospho-Olivine sind als Festkörper-Verfahren anzusehen. Beispielhaft kann hierzu verwiesen werden auf WO 97/40541, US 5,910,382 oder WO 00/60680. Bei diesen Festkörperverfahren werden in der Regel pulverisierte Ausgangsmaterialien meist durch Naß- oder Trockenmahlen vermengt, bevor sie zu ihrer chemischen Umsetzung einer Wärmebehandlung unterzogen werden. Das dabei in Form eines Sinterkuchens oder -granulates anfallende Reaktionsprodukt muss anschließend meist gebrochen, gemahlen und klassiert werden, um ein technisch weiterverarbeitbares Produkt zu erhalten. Nachteile von Festkörperverfahren sind die für eine vollständige Umsetzung oft notwendigen hohen Sintertemperaturen und langen Ofenzeiten, die zu hohem Energieaufwand und niedrigen Durchsätzen führen. Weiterhin erhöhen Mahlprozesse das Risiko des Einbringens von Verunreinigungen, die insbesondere für elektrochemische Anwendungen kritisch sein können. Zudem erfordern die in Mahlprozessen erhaltenen, breiten Teilchengrößenverteilungen meist ein Klassieren des Produkts, was ebenfalls zu Materialverlusten führt.

### Aufgabe der Erfindung

Der Erfindung liegt daher die Aufgabe zugrunde, Lithiumphosphate vorzusehen, welche bei ihrer elektrochemischen Anwendung eine hohe spezifische Kapazität, selbst bei Raumtemperatur, aufweisen. Ferner soll ein einfaches und kostengünstiges Verfahren zu ihrer Herstellung vorgesehen werden.

### Zusammenfassung der Erfindung

Die obige Aufgabe wird gelöst durch binäre, ternäre und quaternäre Lithiumphosphate gemäß Anspruch 1 sowie ein Verfahren zu ihrer Herstellung gemäß Anspruch 4. Bevorzugte bzw. besonders zweckmäßige Ausgestaltungen des Anmeldungsgegenstandes sind in den Unteransprüchen angegeben.

Gegenstand der Erfindung sind daher binäre, ternäre und quaternäre Lithiumphosphate der allgemeinen Formel

Li(FeₓM¹ _{y}M² _{z})PO₄

in der M¹ mindestens ein Element der Sc, Ti, V, Cr, Mn, Co, Ni, Cu, Zn, Be, Mg, Ca, Sr, Ba, Al, Zr und La umfassenden Gruppe,
M² mindestens ein Element der Sc, Ti, V, Cr, Mn, Co, Ni, Cu, Zn, Be, Mg, Ca, Sr, Ba, Al, Zr und La umfassenden Gruppe.
x=0,5 bis 1,
y=0 bis 0,5,
z = 0 bis 0,5, mit der Maßgabe bedeuten, daß x + y + z = 1 ist, oder
x = 0, y = 1, z = 0 bedeuten,
erhältlich durch ein Verfahren, bei dem Vorläuferverbindungen der Elemente Li, Fe, M¹ und/oder M² aus wäßrigen Lösungen ausgefällt werden und dann das Fällungsprodukt unter einer Inertgasatmosphäre oder einer reduzierenden Atmosphäre bei einer Temperatur im Bereich von Raumtemperatur bis etwa 200°C getrocknet und bei einer Temperatur im Bereich von 300°C bis 1000°C getempert wird.

Ein weiterer Gegenstand der Erfindung ist ein Verfahren zur Herstellung dieser Lithiumphosphate, welches dadurch gekennzeichnet ist, daß man Vorläuferverbindungen der Elemente Li, Fe, M¹ und/oder M² aus wässrigen Lösungen ausfällt und dann das Fällungsprodukt unter einer Inertgasatmoshphäre oder einer reduzierenden Atmosphäre bei einer Temperatur im Bereich von Raumtemperatur bis etwa 200°C trocknet und bei einer Temperatur im Bereich von 300°C bis 1000°C tempert.

Gegenstand der Erfindung ist weiterhin die Verwendung der erfindungsgemäßen Lithiumphosphate als Kathodenmaterial in Lithiumakkumulatoren, vorzugsweise sekundären (wiederaufladbaren) Lithiumbatterien.

### Detaillierte Beschreibung der Erfindung

Gemäß der Erfindung hat sich überraschenderweise gezeigt, daß es durch das erfindungsgemäße Verfahren gelingt, neuartige Lithiumphosphate mit besonderer Oberflächenstruktur, geringer Teilchengröße sowie enger Teilchengrößenverteilung zu erhalten. Die erfindungsgemäßen Lithiumphosphate ergeben eine bei Raumtemperatur gemessene Kapazität beim Einsatz in Lithiumakkumulatoren von bis zu etwa 155 mAh/g, was über 90% des theoretischen Wertes von 170 mAh/g entspricht, wohingegen vergleichbare Lithiumphosphate, die durch herkömmliche Festkörperverfahren hergestellt werden, Kapazitäten von lediglich bis zu etwa 100 mAh/g aufweisen.

Bei einer bevorzugten Ausführungsform enthält die Phosphatmatrix der erfindungsgemäßen Lithiumphosphate homogen verteilte Kohlenstoffpartikel, was zu einer deutlichen Erhöhung der Leitfähigkeit, einer besseren Verarbeitbarkeit, beispielsweise durch Walzen, Extrusion mit geeigneten Begleitstoffen sowie zu einer Verringerung der Agglomeration der Teilchen führt.

Weiterhin besitzen die erfindungsgemäßen Lithiumphosphate vorzugsweise eine durchschnittliche Teilchengröße von weniger als etwa 6 µm, vorzugsweise weniger als etwa 3 µm. Die nach dem PET-Verfahren gemessenen Oberflächen liegen üblicherweise bei etwa 2 m²/g. Ferner sind die mit Hife des erfindungsgemäßen Verfahrens erhaltenen Lithiumphosphate weitestgehend phasenrein, indem sie beispielsweise weniger als 2% Eisenphosphat enthalten.

Die Herstellung der erfindungsgemäßen Lithiumphosphate erfolgt mittels einer an sich bekannten Naß-Fällungsreaktion in wäßrigem Medium. Als Ausgangsmaterialien eignen sich lösliche Lithiumsalze, Eisensalze und lösliche Salze der Elemente M¹ und M² sowie lösliche Phosphate des Lithiums oder Ammoniums.

Durch Einstellung und Einhaltung eines geeigneten pH-Wertes der wäßrigen Lösung während der Fällungsreaktion, durch geeignete Temperaturwahl, durch viskositätsbeeinflussende Zusätze und durch Beeinflussung der Mischbedingungen können die Teilchenform und die Partikelgröße der Phosphate maßgeblich im Sinne gewünschter Materialeigenschaften beeinflußt werden. Durch Variation der Stöchometrie der verwendeten Salze kann das Verhältnis der Elemente in den Phosphaten nahezu beliebig eingestellt werden. Durch zusätzlichen Einsatz von Lithiumhydroxid kann der pH-Wert des Reaktionsmediums in die gewünschte Richtung beeinflußt werden.

Erfindungsgemäß kann das Eisen in den Lithiumeisenphosphaten auch ersetzt werden durch mindestens eines der Elemente Sc, Ti, V, Cr, Mn, Co, Ni, Cu, Zn, Be, Mg, Ca, Sr, Ba, Al, Zr und La.

Die bei der erfindungsgemäßen Fällungsreaktion erhaltenen Vorläufermaterialien werden zunächst auf einen Feuchtigkeitsgehalt von vorzugsweise < 5 % getrocknet und dann bei einer Temperatur von 300°C bis 1000°C getempert, wobei das Tempern bei deutlich milderen Bedingungen und vor allem während kürzerer Zeitdauer als bei vergleichbaren Festkörperreaktionen abläuft. Während des Trocknens und des Temperns bei hohen Temperaturen wird eine Inertgasatmosphäre, beispielsweise Stickstoff oder Argon, angewandt, wobei es vorteilhaft ist, der Inertgasatmosphäre geringe Mengen von beispielsweise Wasserstoff als reduzierendem Gas zuzusetzen, um so eine reduzierende Atmosphäre vorzusehen.

Bei einer Variation des erfindungsgemäßen Verfahrens ist es nicht notwendig, das Fällungsprodukt zu isolieren und vor dem Tempern zu trocknen. Es ist ebenso möglich, aus der das Fällungsprodukt enthaltenden Suspension den Wasseranteil zu verdampfen und dann den Rückstand einer kontinuierlichen Trocknungs- und Temperbehandlung unter Inertgasatmosphäre oder einer reduzierenden Atmosphäre zu unterziehen. Diese Behandlung besteht beispielsweise aus einer kontinuierlichen Aufheizphase von Raumtemperatur auf 600 bis 1000°C, vorzugsweise 600 bis 750°C, einer Haltephase bei dieser erhöhten Temperatur sowie einer Abkühlphase auf Raumtemperatur.

Vorzugsweise wird die Fällung und/oder das Trocknen und Tempern in Gegenwart von Additiven, vorzugsweise organischen Verbindungen durchgeführt, die sich unter Trocknungs- oder Temperbedingungen zu Stoffen umwandeln, welche die Verarbeitungs- und elektrischen Materialeigenschaften der Lithiumphosphate verbessern. Insbesondere werden hierbei solche Additive eingesetzt, welche nach dem Trocknen und Tempern zu homogen verteilten Kohlenstoffpartikeln in der Phosphatmatrix führen. Beispiele geeigneter Additive sind Polyalkylenglykole, wie Polyethylenglykole, Stärke oder Stärkederivate, Zucker oder Zuckerderivate, wie beispielsweise Lactose, Mono- oder Polycarbonsäuren oder deren Derivate, insbesondere Polyhydroxycarbonsäuren, wie Citronensäure. Bevorzugte Additive zeichnen sich dadurch aus, daß sie unter den angewandten Temperbedingungen zusätzlich zu ihrer Eigenschaft als Materialverbesserer auch als intrinsische Reduktionsmittel wirken (siehe nachfolgendes Beispiel 4).

### Kurze Beschreibung der Zeichnungen

**Figur 1** zeigt das Röntgenbeugungsdiagram des in Beispiel 1 hergestellten Lithiumeisenphosphats.
**Figuren 2 bis 5** zeigen die Ergebnisse der Teilchengrößenanalysen der in den Beispielen 1 bis 4 erhaltenen Lithiumeisenphosphate.
**Figur 6** zeigt das Zyklenverhalten beim Laden und Entladen des in Beispiel 4 erhaltenen Lithiumeisenphosphats, wenn dieses als Kathodenmaterial in einem Lithiumakkumulator eingesetzt wird.
**Figur 7** zeigt die Lade-Entladekurve zum ersten Zyklus des Messung für Figur 6.

### Beispiele

### Beispiel 1

### Herstellung von LiFePO₄

Aus 0,52 mol (54,26 g) Lithiumdihydrogenphosphat, und 0,4 mol (111,21 g) Eisen(II)-sulfat-Heptahydrat, jeweils gelöst in 400 ml anarobisiertem demineralisiertem Wasser, wird unter Rühren unter Inertgas eine homogen disperse Mischung hergestellt. Zu dieser Mischung wird unter Rühren bei Raumtemperatur eine zuvor anaerobisierte, wässrige Lösung von 0,85 mol (35,70 g) Lithiumhydroxid-Monohydrat, gelöst in 200 ml demineralisiertem Wasser, über einen Zeitraum von 15 Minuten zugetropft. Unter strengem Sauerstoffausschluß erhält man eine weiße, leicht sedimentierende Suspension.

Die Suspension wird unter Stickstoffatmosphäre filtriert und mit insgesamt 500 ml anaerobisiertem demineralisiertem Wasser sulfatfrei gewaschen.

Der Precursor, erhalten als weißer Filterkuchen, besteht aus Lithium-o-phosphat und Vivianit (Fe₃(PO₄)₂-Hydrat) und wird zunächst unter Stickstoff bei 150 °C getrocknet.

Die homogene Phosphatmischung wird zur Umwandlung in die Triphylinphase im Stickstoffstrom ausgehend von Raumtemperatur und beginnend mit einer Aufheizrate von 2 K/min zunächst auf 650 °C für 12 h und anschließend mit gleicher Heizrate auf eine Endtemperatur von 675 °C erhitzt. Diese wird für weitere 12 h beibehalten.

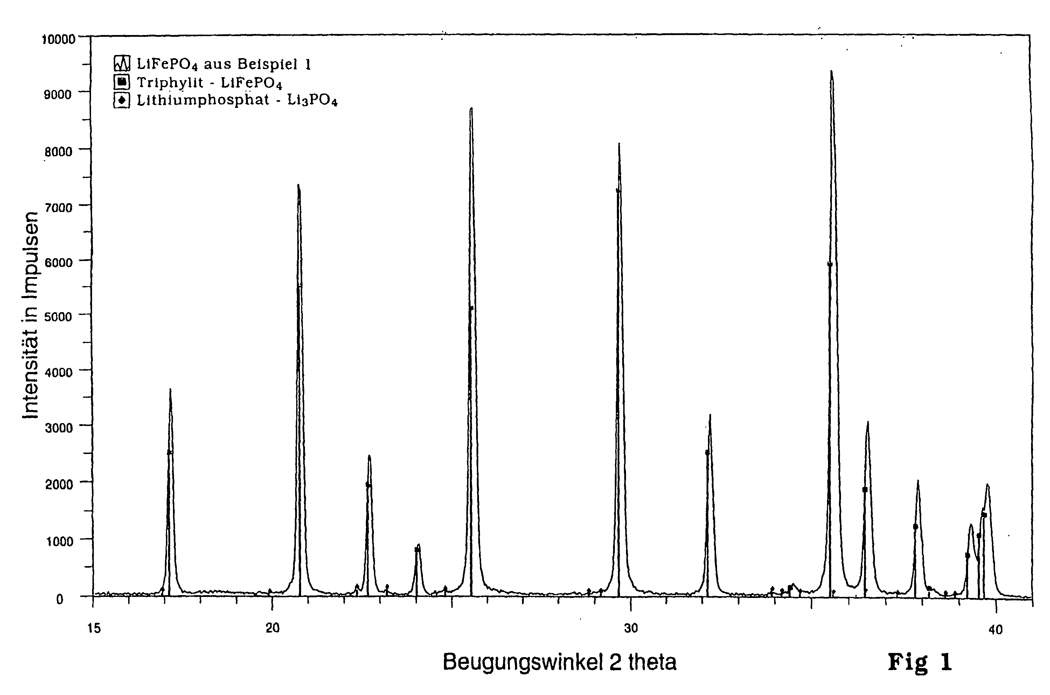

Figur 1 zeigt das Röntgenbeugungsdiagram des hierbei erhaltenen Lithiumeisenphosphats. Zum Vergleich sind ebenfalls die Diagramme von reinem Triphylit (LiFePO₄) sowie von reinem Lithiumphosphat (Li₃PO₄) unterlegt. Es zeigt sich, daß das erfindungsgemäße Lithiumeisenphosphat nahezu phasenrein ist.

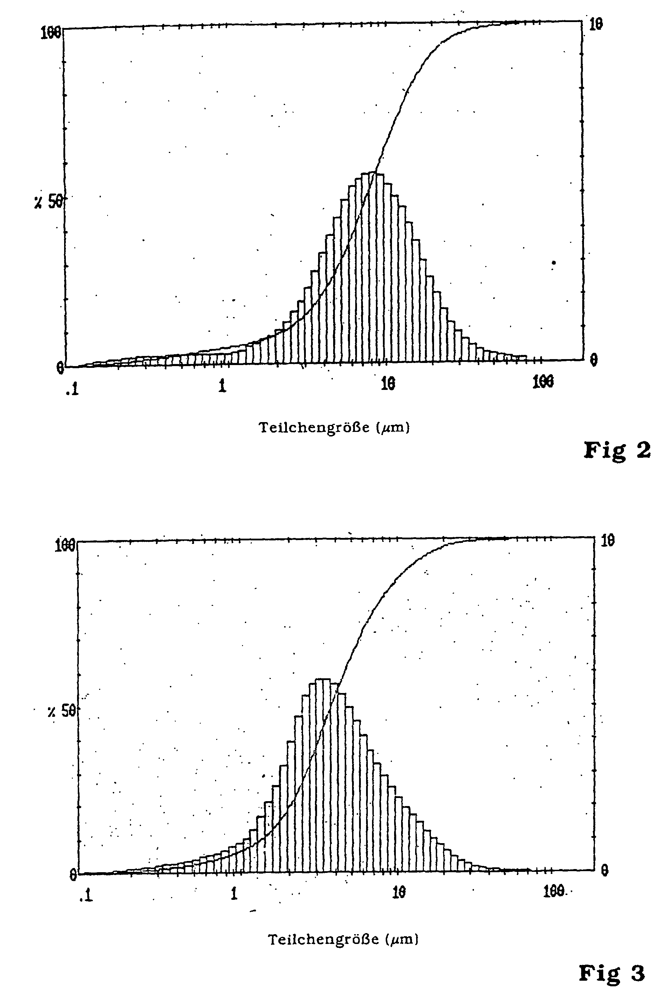

Die Teilchengrößenanalyse des erhaltenen Lithiumeisenphosphats ist in Figur 2 gezeigt. Die Teilchengrößenmessung erfolgte mittels einer Lichtstreuungsmethode unter Verwendung einer handelsüblichen Vorrichtung (Malvern Instruments SBOD). Die durchschnittliche Teilchengröße ergibt sich mit 2,25 µm bei einer engen Teilchengrößenverteilung.

### Beispiel 2

### Herstellung von LiFe_{0,98}Mn_{0,02}PO₄

Aus 0,13 mol (13,57 g) Lithiumdihydrogenphosphat, gelöst in 100 ml demineralisiertem Wasser, und einer Lösung von 0,098 mol (27,25 g) Eisen(II)-sulfat-Heptahydrat und 0,002 mol (0,34 g) Mangansulfat-Monohydrat in 100 ml demineralisiertem Wasser wird unter Rühren und einer Schutzgasatmosphäre eine homogene Mischung hergestellt. Zu dieser Mischung wird unter Rühren bei Raumtemperatur eine zuvor anaerobisierte, wässrige Lösung von 0,212 mol (8,94 g) Lithiumhydroxid-Monohydrat, gelöst in 50 ml demineralisiertem Wasser, über einen Zeitraum von 4 Minuten zugetropft.

Die weiße Suspension wird unter Stickstoffatmosphäre filtriert und mit insgesamt 150 ml anaerobisiertem demineralisiertem Wasser sulfatfrei gewaschen.

Der weiße Filterkuchen wird unter Stickstoffatmosphäre bei 130 °C getrocknet.

Die so erhaltene Phosphatmischung wird zur Umwandlung in die Triphylinphase unter Stickstoff, dem als reduzierendes Agens 1 Vol-% Wasserstoff zugemischt wird, bei Raumtemperatur beginnend mit einer Aufheizrate von 3 K/min auf eine Endtemperatur von 675 °C erhitzt. Die Endtemperatur wird für 12 h gehalten. Während der ganzen Temperung wird die Wasserstoff/Stickstoffzufuhr beibehalten.

Die Teilchengrößenanalyse des erhaltenen Lithiumeisen-manganphosphats ist in Figur 3 gezeigt. Bei sehr enger Teilchengrößenverteilung ergibt sich eine mittlere Teilchengröße von 2,63 µm.

### Beispiel 3

### Herstellung von LiFePO₄ unter Zuhilfenahme von Additiven

Aus 0,065 mol (6,78 g) Lithiumdihydrogenphosphat, gelöst in 50 ml einer anaerobisierten 20 %igen wässrigen Polyethylenglycol-20000-Lösung und einer ebenso anaerobisierten Lösung aus 0,05 mol (13.90 g) Eisen(II)-sulfat-Heptahydrat in 60 ml 20 %iger wässriger Polyethylenglycol-20000-Lösung wird unter Rühren eine homogene Mischung hergestellt. Zu dieser Mischung wird unter Rühren bei Raumtemperatur eine zuvor anaerobisierte, wässrige Lösung von 0.106 mol (4,47 g) Lithiumhydroxid-Monohydrat, gelöst in 25 ml demineralisiertem Wasser, über einen Zeitraum von 3 Minuten zugetropft. Die entstehende stabile, weiße Suspension wird durch Zugabe von 500 ml anaerobisiertem Ethanol (99,6 %ig) gebrochen. Danach wird das Sediment unter Stickstoffatmosphäre zentrifugiert (3000 upm) und der Bodenkörper mit insgesamt 200 ml anaerobisiertem demineralisiertem Wasser sulfatfrei gewaschen und danach unter Stickstoff bei 150 °C getrocknet.

Die so erhaltene Phosphatmischung wird zur Umwandlung in die Triphylinphase unter Stickstoff, dem als reduzierendes Agens 10 Vol-% Wasserstoff zugemischt sind, bei Raumtemperatur beginnend mit einer Aufheizrate von 3 K/min auf eine Endtemperatur von 675 °C erhitzt. Die Endtemperatur wird für 12 h gehalten. Während der ganzen Temperung wird die Wasserstoff/Stickstoffzufuhr beibehalten.

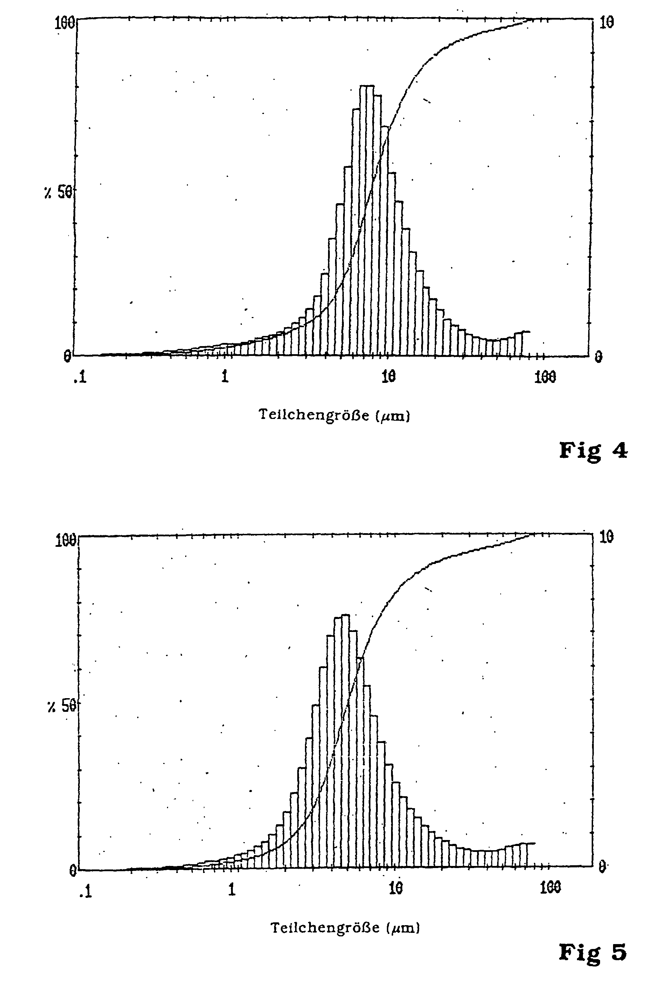

Die Teilchengrößenanalyse des erhaltenen Lithiumeisenphosphats ist in Figur 4 gezeigt. Bei sehr enger Teilchengrößenverteilung ergibt sich eine mittlere Teilchengröße von 2,19 µm.

### Beispiel 4

### Herstellung von LiFePO₄ - kohlehaltig, durch Imprägnierung mit Lactose

Aus 0,13 mol (13,57 g) Lithiumdihydrogenphosphat und 0,1 mol (27,80 g) Eisen(II)-sulfat-Heptahydrat wird unter Rühren in 200 ml demineralisiertem Wasser (wie in Beispiel 1) eine homogene Mischung hergestellt. Zu dieser Mischung wird unter Rühren bei Raumtemperatur eine zuvor anaerobisierte, wässrige Lösung von 0.212 mol (8.94 g) Lithiumhydroxid-Monohydrat, gelöst in 50 ml demineralisiertem Wasser, über einen Zeitraum von 4 Minuten zugetropft. Man erhält unter strengem Sauerstoffausschluß eine weiße, leicht sedimentierende Suspension.

Die Suspension wird unter Stickstoffatmosphäre filtriert und mit insgesamt 100 ml anaerobisiertem demineralisiertem Wasser sulfatfrei gewaschen.

Aus dem weißen Filterkuchen wird unter Zusatz von 20 g einer 10 %igen Lactoselösung ein homogener, dickflüssiger Schlicker hergestellt. Nach dieser Imprägnierung wird die Mischung unter Stickstoff bei 150 °C getrocknet.

Diese homogene Phosphat-Lactose-Mischung wird zur Umwandlung in die Triphylinphase in Stickstoffatmosphäre bei Raumtemperatur beginnend mit einer Aufheizrate von 3 K/min auf eine Endtemperatur von 725 °C erhitzt. Die Endtemperatur wird für 12 h gehalten. Während der ganzen Temperung wird die Stickstoffzufuhr beibehalten.

Die Teilchengrößenanalyse des erhaltenen Lithiumeisenphosphats ist in Figur 5 gezeigt. Hierbei ergibt sich bei sehr enger Teilchengrößenverteilung eine mittlere Teilchengröße von 2,70 µm.

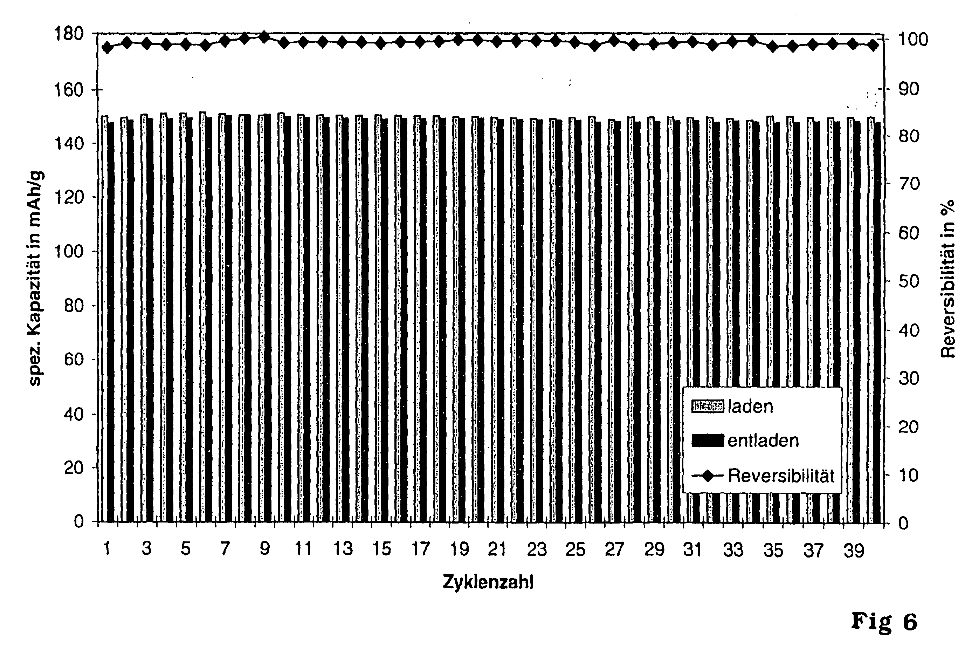

Das erhaltene Lithiumeisenphosphat wurde als Kathodenmaterial in einem Lithiumakkumulator verwendet. Figur 6 zeigt die Abhängigkeit der spezifischen Kapazität bei wiederholtem Laden und Entladen der Batterie. Die galvanostatische elektrochemische Messung erfolgte hierbei in einer mit Flüssigelektrolyt (LP30 von der Firma Merck) gefüllten Glaszelle in 3-Elektroden-Anordnung mit Gegen- und Referenzelektroden aus Lithiummetall. Die Stromstärke betrug konstant ±0,26 mA, was einer flächenbezogenen Stromdichte von 0,26 mA/cm² bzw. einer theoretischen Lade-/Entlade-Rate von Kapazität (C)/20 h entspricht. Die Potentialgrenzen waren 2,9 V und 4,0 V gegen Li/Li⁺. Wie zu sehen ist, treten nach 40 Zyklen keinerlei Zyklenverluste auf, so daß die Reversibilität des erfindungsgemäßen Lithiumeisenphosphats vorzüglich ist.

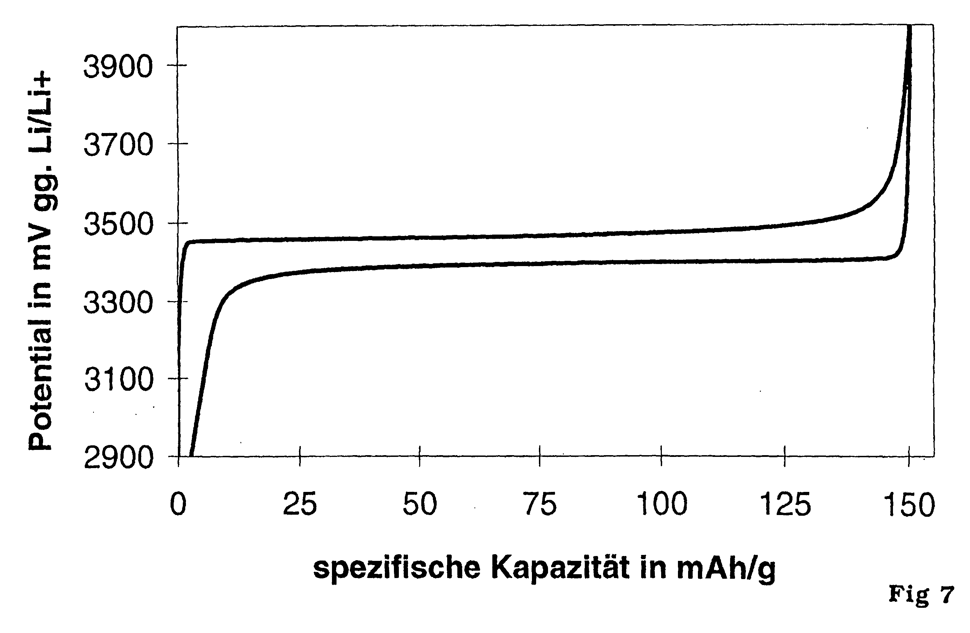

Schließlich zeigt Figur 7 die Lade-Entladekurve zum ersten Zyklus bei der für Figur 6 beschriebenen Messung.

### Beispiel 5

### Herstellung von LiFePO₄ - kohlehaltig durch Imprägnierung mit Lithiumcitrat

100ml einer Lösung von 0,05 mol (19,61 g) Ammoniumeisen(II)-sulfat-Hexahydrat, gelöst in demineralisiertem anaerobisiertem Wasser, werden unter Rühren binnen 1 min zu 100ml einer Lösung von 0,25 mol (33,04 g) Diammoniumhydrogenphosphat in anaerobisiertem Wasser geschüttet. Unter strengem Sauerstoffausschluß erhält man nach 5 min Rühren eine weiße, schnell sedimentierende Suspension. Die Suspension wird unter Stickstoffatmosphäre filtriert, mit anaerobisiertem Wasser sulfatfrei gewaschen und bei 75° C getrocknet. Das getrocknete Fällungsprodukt besteht ausschließlich aus sphärischen Pulverpartikeln (Durchmesser < 5µm) der Phase Ammoniumeisen(II)-phosphat-Monohydrat.

Zur weiteren Umsetzung zum Lithiumeisenphosphat werden 0,025 mol (4,67 g) des gefällten Ammoniumeisen(II)-phosphat-Monohydrats zu 5ml einer mit Citronensäure neutral gestellten Lösung von 0,00875 mol (2,47 g) Tri-Lithiumcitrat-Tetrahydrat in anaerobisiertem, demineralisiertem Wasser gegeben und zu einer homogenen, dünnflüssigen Suspension verrührt. Unter Rühren wird die Suspension vorsichtig ohne Sieden erhitzt und der Wasseranteil verdampft, bis die Suspension Fäden zieht und beim Abkühlen zu einer karamellartig zähen Masse erstarrt. Diese Masse wird anschließend einer Trocknungs- und Temperbehandlung in Stickstoffatmosphäre unterzogen. Diese Behandlung besteht aus einer sechsstündigen Aufheizphase von Raumtemperatur auf 675° C, aus einer Haltephase von 12 h bei 675° C und aus einem sechsstündigen Abkühlschritt. Der erhaltene poröse, harte Sinterkuchen wird im Achatmörser gebrochen und gemahlen, bis ein glattes, fließfähiges schwarzes Pulver erhalten wird. Das Temperprodukt besteht aus LiFePO₄ (Triphylin) und geringfügigen Beimengungen (< 3 %) von Lithiumphosphat (Li₃PO₄) und Eisenphosphid (FeP). Dieses Produkt enthält ungefähr 10 Gew.-% amorphen Kohlenstoff.

### Beispiel 6

### Herstellung von LiFePO₄ - über Imprägnierung mit Lithiumacetat

0,025 mol (4,67 g) des gefällten Ammoniurneisen(II)-phosphat-Monohydrat aus Beispiel 5 werden zu 2 ml einer mit Citronensäure neutral gestellten Lösung von 0,0265 mol (2,68 g) Lithiumacetat-Dihydrat in anaerobisiertem, demineralisiertem Wasser gegeben und zu einer homogenen Suspension verrührt. Unter Rühren wird die Suspension vorsichtig ohne Sieden erhitzt und der Wasseranteil verdampft, bis die Suspension beim Abkühlen zu einer krümeligen, hellgrünen Masse erstarrt. Diese Masse wird anschließend einer Trocknungs- und Temperbehandlung in Stickstoffatmosphäre unterzogen. Diese besteht aus einer sechsstündigen Aufheizphase von Raumtemperatur auf 675° C, aus einer Haltephase von 12 h bei 675° C und aus einem sechsstündigen Abkühlschritt. Das erhaltene Granulat wird im Achatmörser gemahlen, bis ein hellgraues Pulver erhalten wird. Das Temperprodukt besteht aus LiFePO₄ (Triphylin) und Beimengungen von Lithiumphosphat (Li₃PO₄), Magnetit (Fe₃O₄) und Wüstit (FeO). Diese Produkt enthält keinen Kohlenstoff.

## Patentansprüche

1. Binäre, ternäre und quaternäre Lithiumphosphate der allgemeinen Formel
Li(FeₓM¹ _{y}M² _{z})PO₄
in der M¹ mindestens ein Element der Sc, Ti, V, Cr, Mn, Co, Ni, Cu, Zn, Be, Mg, Ca, Sr, Ba, Al, Zr und La umfassenden Gruppe,
M² mindestens ein Element der Sc, Ti, V, Cr, Mn, Co, Ni, Cu, Zn, Be, Mg, Ca, Sr, Ba, Al, Zr und La umfassenden Gruppe,
x=0,5 bis 1,
y=0 bis 0,5,
z = 0 bis 0,5, mit der Maßgabe bedeuten, daß x + y + z = 1 ist, oder
x = 0, y = 1, z = 0 bedeuten,
erhältlich durch ein Verfahren, bei dem Vorläuferverbindungen der Elemente Li, Fe, M¹ und/oder M² aus wäßrigen Lösungen ausgefällt werden und dann das Fällungsprodukt unter einer Inertgasatmosphäre oder einer reduzierenden Atmosphäre bei einer Temperatur im Bereich von Raumtemperatur bis etwa 200°C getrocknet und bei einer Temperatur im Bereich von 300°C bis 1000°C getempert wird.

2. Lithiumphosphate nach Anspruch 1, wobei die Phosphatmatrix weiterhin homogen verteilte Kohlenstoffpartikel enthält.

3. Lithiumphosphate nach Anspruch 1 und/oder 2, welche eine durchschnittliche Teilchengröße von weniger als etwa 6 µm, vorzugsweise weniger als etwa 3 µm, aufweisen.

4. Verfahren zur Herstellung der Lithiumphosphate nach den Ansprüchen 1-3, **dadurch gekennzeichnet, daß** Vorläuferverbindungen der Elemente Li. Fe. M¹ und/oder M² aus wässrigen Lösungen ausgefällt werden und dann das Fällungsprodukt unter einer Inertgasatmosphäre oder einer reduzierenden Atmosphäre bei einer Temperatur im Bereich von Raumtemperatur bis etwa 200°C getrocknet und bei einer Temperatur im Bereich von 300°C bis 1000°C getempert wird.

5. Verfahren nach Anspruch 4, **dadurch gekennzeichnet, daß** die Fällung und/oder das Trocknen und Tempern in Gegenwart von Additiven, vorzugsweise organischen Verbindungen durchgeführt wird, die sich unter Trocknungs- oder Temperbedingungen zu Stoffen umwandeln, welche die Verarbeitungs- und elektrischen Materialeigenschaften der Lithiumphosphate verbesssern.

6. Verfahren nach Anspruch 5, **dadurch gekennzeichnet, daß** solche Additive eingesetzt werden, welche nach dem Trocknen und Tempern zu homogen verteilten Kohlenstoffpartikeln in der Phosphatmatrix führen.

7. Verfahren nach Anspruch 5 und/oder 6, **dadurch gekennzeichnet, daß** als Additive Polyalkylenglykole, Stärke oder Stärkederivate, Zucker oder Zuckerderivate, Mono- oder Polycarbonsäuren oder deren Derivate eingesetzt werden.

8. Verwendung der Lithiumphosphate nach den Ansprüchen 1 bis 3 oder der nach dem Verfahren gemäß den Ansprüche 4 bis 7 erhaltenen Lithiumphosphate als Kathodenmaterial in Lithiumakkumulatoren, vorzugsweise sekundären Lithiumbatterien.

## Claims

1. Binary, ternary and quaternary lithium phosphates of general formula
Li(FeₓM¹_{y}M²_{z})PO₄
wherein M¹ represents at least one element of the group comprising Sc, Ti, V, Cr, Mn, Co, Ni, Cu, Zn, Be, Mg, Ca, Sr, Ba, Al, Zr, and La, and
M² represents at least one element of the group comprising Sc, Ti, V, Cr, Mn, Co, Ni, Cu, Zn, Be, Mg, Ca, Sr, Ba, Al, Zr, and La,
with
x = 0.5 to 1,
y = 0 to 0.5,
z = 0 to 0.5, provided that x+y+z=1, or x=0, y=1 and z=0.
the said lithium phosphates being obtainable according to a method whereby precursor compounds of elements Li, Fe, M¹ and/or M² are precipitated from aqueous solutions and the precipitation product is then dried in an inert gas atmosphere or a reducing atmosphere at a temperature which is in the range from room temperature to approximately 200° C and tempered at a temperature in the range from 300° C to 1000° C.

2. Lithium phosphates in accordance with claim 1, wherein the phosphate matrix further contains carbon particles with homogenous distribution.

3. Lithium phosphates in accordance with claim 1 and/or claim 2 that have an average particle size of less than approximately 6 µm, preferably less than approximately 3 µm.

4. Process for the manufacture of lithium phosphates in accordance with claims 1 - 3, **characterised by** precursor compounds of elements Li, Fe, M¹ and/or M² being precipitated from aqueous solutions and the precipitation product then being dried in an inert gas atmosphere or a reducing atmosphere at a temperature which is in the range from room temperature to approximately 200° C and tempered at a temperature in the range from 300° C to 1000° C.

5. Process according to claim 4 **characterised by** the precipitation and/or the drying and tempering taking place in the presence of additives, preferably organic compounds, which under drying and tempering conditions are transformed into matter that improve the processing and electrical material characteristics of the lithium phosphates.

6. Process according to claim 5 **characterised in that** the additives used lead to a homogenous distribution of carbon particles in the phosphate matrix after the drying and tempering process.

7. Process according to claim 5 and/or 6 **characterised in that** polyalkylene glycols, starch or starch derivatives, sugar or sugar derivatives, mono- or polycarboxylic acids or their derivatives are used as additives.

8. Use of lithium phosphates in accordance with claims 1 to 3 or the lithium phosphates obtained according to the processes in accordance with claims 4 to 7 as cathode materials in lithium accumulators, preferably secondary lithium batteries.

## Revendications

1. Phosphates de lithium binaires, ternaires et quaternaires de formule générale :
Li(FeₓM¹ _{y}M² _{z})PO₄
dans laquelle M¹ est au moins un élément compris dans le groupe Sc, Ti, V, Cr, Mn, Co, Ni, Cu, Zn, Be, Mg, Ca, Sr, Ba, Al, Zr et La,
M² au moins un élément compris dans le groupe Sc, Ti, V, Cr, Mn, Co, Ni, Cu, Zn, Be, Mg, Ca, Sr, Ba, Al, Zr et La,
x = 0,5 à 1,
y = 0 à 0,5,
z = 0 à 0,5 avec la condition que x + y +z = 1, ou
x = 0, y=1, z=0,
pouvant être obtenus par un procédé dans lequel des composés précurseurs des éléments Li, Fe, M¹ et/ou M² sont précipités à partir de solutions aqueuses et ensuite le produit précipité est séché sous une atmosphère de gaz inerte ou sous une atmosphère réductrice à une température comprise entre la température ambiante et environ 200° C et est trempé à une température comprise entre 300° C et 1000° C.

2. Phosphates de lithium selon la revendication 1, dans lesquels la matrice de phosphate renferme en outre des particules carbonées réparties de manière homogène.

3. Phosphates de lithium selon la revendication 1 et/ou 2, qui présentent une taille de particule moyenne inférieure à environ 6 µm, de préférence inférieure à environ 3 µm.

4. Procédé pour la préparation des phosphates de lithium selon les revendications 1 à 4, **caractérisé en ce que** les composés précurseurs des éléments Li, Fe, M¹ et/ou M² sont précipités à partir de solutions aqueuses et ensuite le produit précipité est séché sous une atmosphère de gaz inerte ou sous une atmosphère réductrice à une température comprise entre la température ambiante et environ 200° C et est trempé à une température comprise entre 300° C et 1000° C.

5. Procédé selon la revendication 4, **caractérisé en ce que** la précipitation et/ou le séchage et la trempe sont effectués en présence d'additifs, de préférence des composés organiques qui se transforment, dans les conditions de séchage ou de trempe, en des produits qui améliorent les caractéristiques de transformation électriques des phosphates de lithium.

6. Procédé selon la revendication 5, **caractérisé en ce qu'**on ajoute des additifs tels que ceux-ci permettent d'obtenir, dans la matrice de phosphate, après le séchage et la trempe, une répartition homogène des particules carbonées.

7. Procédé selon la revendication 5 et/ou 6, **caractérisé en ce qu'**on ajoute en tant qu'additifs des glycols de polyalkylène, de l'amidon ou des dérivés d'amidon, du sucre ou des dérivés de sucre, des acides mono ou polycarbonés ou des dérivés de ceux-ci.

8. Utilisation des phosphates de lithium selon les revendications 1 à 3 ou obtenus selon le procédé conforme aux revendications 4 à 6, en tant que matériau de cathode pour des accumulateurs au lithium, de préférence des batteries au lithium secondaires.
